(19) Europäisches Patentamt
European Patent Office
Office européen des brevets

(11) Publication number: 0 339 258 A1

(12) # EUROPEAN PATENT APPLICATION

(21) Application number: 89105026.2

(51) Int. Cl.4: C08K 5/34

(22) Date of filing: 21.03.89

(30) Priority: 26.04.88 US 186384

(43) Date of publication of application:
02.11.89 Bulletin 89/44

(84) Designated Contracting States:
DE FR GB IT NL

(71) Applicant: GENERAL ELECTRIC COMPANY
1 River Road
Schenectady New York 12305(US)

(72) Inventor: Ehlinger, Robert Bruce
58-3 Woodlake Road
Albany New York 12203(US)
Inventor: Webb, Paul Arden
149A RT. 111
Hannacroix New York 12087(US)

(74) Representative: Catherine, Alain
General Electric France Service de Propriété
Industrielle 18 Rue Horace Vernet B.P. 76
F-92134 Issy-les-Moulineaux Cédex(FR)

(54) **Non-yellowing uv-stabilizers.**

(57) Compositions of ultraviolet degradable thermoplastic resins which include low levels of 2-hydroxy-3,5-disubstituted derivatives of 2-aryl-2H-benzotriazoles provide excellent protection against UV-degradation and show virtually no yellowing in aquoeus solutions which contain trace amounts of metals.

EP 0 339 258 A1

# NON-YELLOWING UV-STABILIZERS

## FIELD OF THE INVENTION

The present invention relates to the use of 2-hydroxy-3,5 substituted benzotriazoles as UV additives for resin matrices.

## BACKGROUND OF THE INVENTION

The degradation of thermoplastic resins due to the effects of ultraviolet light is well known in the art. The photo-deterioration is a particular concern when these resins are exposed to ultraviolet light, i.e., sunlight, for long periods of time. Accordingly, it has long been a goal of the art to provide additives which improve the stability of these materials.

Many additives and stabilizers have been developed and are well known in the art. One type of additive is known as the ultraviolet absorber. These compounds selectively absorb the ultraviolet light from the sun and re-emit the energy in the form of heat or sometimes visible light. Consequently, the resin is protected from photo decomposition.

A good UV-absorber for use in plastics should ideally absorb the ultraviolet in sunlight and at the same time be a colorless material by visual observation. In other words, the UV-absorber should impart no color to the plastic, should be sufficiently stable to undergo the curing of the plastic, and should absorb sufficient amounts of UV light to protect the plastic against yellowing and decomposition due to exposure to sunlight. In addition, the UV-absorber should be sufficiently compatible with the plastic resin so as to be easily incorporated into the same. A common deficiency of the UV-absorbers is their tendency to be leached out of the plastics by solvents or to be lost by evaporation during heat treatments.

Popular UV-stabilizers for resin matrices include the benzotriazoles and benzophenones. In general, the above-mentioned additives are distinguished by a very slight absorption in visible light and very high fastness to light in various substrates. These compounds, when incorporated into various plastic materials, exhibit the power to absorb ultraviolet radiation within the band of 2900 to 4000A., thereby acting as a filter for all of the radiation passing through. Thus, by using these additives, it is possible to screen out undesirable and degradation radiation in any technical and commercial applications.

Benzotriazoles have been used effectively as UV-stabilizers in many different applications. U.S. Pat. No. 4,076,687 (Irick, Jr. et al.) discloses that bichromophoric benzotriazole-benzooxazole compounds are effective UV-stabilizers when added in an effective amount to polymeric compositions. The bichromophoric compositions are added in amounts of from 0.01 to 10% by weight, based upon the weight of the organic material to which they are added. U.S. 3,230,194 (Boyle) discloses the use of 2-(2′-hydroxy-5′-tertiary-octylphenyl)benzotriazoles for protecting polyolefins against UV-deterioration. U.S. 3,072,585 discloses the use of vinylbenzyloxy phenylbenzotriazoles which are said to be very stable to UV light. In addition, U.S. 3,055,896 discloses the use of chlorotriazylamino 2-hydroxyarylbenzotriazoles for protecting cellulose in sheet or fiber form.

Additives of the benzotriazole type are commonly used with or without the presence of other systems such as HALS, for SAN and other types of resins. Differentiation of these additives for use in commonly made for each specific resin based upon the volatility of the additive and its activity as a UV-stabilizer.

While the benzotriazole composition provide UV-stabilizers which work well under normal conditions, it has been found that in aqueous environments often a yellow staining film forms upon the surface of the resin material to which effective amounts of these compositions have been added. This yellow staining film results from the exposure of the stabilized plastic part to trace metal contaminates, such as copper and/or other metals which are found in the aqueous environment. This is especially true in the case of traces of copper in a pool or spa. The trace amounts of copper metal commonly found in pools or spas is due to external copper piping or the use of copper containing additives. It is generally believed that trace amounts of these UV stabilizers found on the surface of the extruded plastic part react in some fashion with the copper to form the yellow staining film upon the part. This significantly detracts from the appearance of the product, which may be a spa or pool step.

Benzophenone compounds, although also widely used as UV-stabilizers, exhibit short-lasting effects because of inherent problems such as thermal decomposition, volatization, sublimation during the production of molded articles, and coloration. For instance, when exposed to water and other aqueous solutions, it has been found that the reaction of small quantities of metal ions or cleaning materials in the solutions with the benzophenones result in coloration of the material.

U.S. Pat. No. 3,498,947 (Seki et al.) attempts to deal with the defects of the benzophenone class of UV-stabilizers, including the aforementioned coloration problems, by providing compositions of organotin compounds containing the benzophenone moiety, which are added at between 0.001 - 5% by weight to synthetic resins. These compounds are more stable at increased temperatures, and therefore provide increased stability to the synthetic resins when molded at high temperatures. In addition, these organotin compounds provide an added benefit when applied to fibers, in that the occurrence of a diminution of the stabilizing effect and a coloration due to the reaction of extremely small quantities of metal ion or cleaning material with the ultraviolet light absorbers during washing is avoided.

The coloration problem has also been addressed in other types of compositions. For example, in U.S. Pat. No. 3,929,726 (Schollenberger et al.), it is disclosed that the combination of polyurethanes with a small amount of organic hydrazide have improved resistance to UV-degradation with or without other generally hydroxyl containing aryl UV-absorbers and antioxidants, including the benzophenones and the benzotriazoles. In particular, Schollenberger et al. disclose in columns 5 - 6, Example II, that a three part stabilizer system consisting of benzoic acid hydrazide in combination with Irganox® 1010 antioxidant, a 3,5-ditertbutyl-4-hydroxyphenylcinnamyl pentrathritol from Ciba Geigy Company, and Tinuvin® 328, a -2-(2′hydroxy-3′,5′-di-(t-amyl) phenyl)benzotriazole, can be soaked in water for at least 16 hours at room temperature (20°C) without significantly reducing their effectiveness (measured by the lapse of time until the development of yellow color).

It has now unexpectedly been found that the 2-hydroxy-3-5 substituted derivates of a 2-aryl-2H-benzotriazole, in addition to providing their normal UV-stabilizing activity, do not show this tendency to form a yellow staining film in aqueous environments. This result is especially surprising since the purpose, activity and structure of these compounds is similar to other UV-stabilizers which show such tendencies.

## SUMMARY OF THE INVENTION

According to the present invention, there is provided an improved method for stabilizing ultraviolet degradable thermoplastic resin compositions comprising a benzotriazole stabilizer when in contact with an aqueous environment containing at least trace amounts of a polyvalent heavy metal ion capable of catalyzing the development of color on the surface of articles formed from said resin compositions, the improvement comprising using as the stabilizer an effective amount of a 2-hydroxy-3,5-disubstituted benzotriazole having the formula:

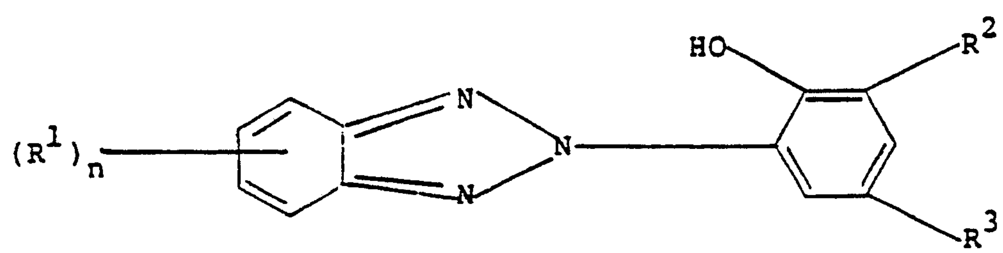

wherein $R^1$ is alkyl of 1 to 6 carbon atoms, alkoxy of 1 to 6 carbon atoms, halogen, carboxy, sulfonamido, sulfonic acid or nitro, n is 0, 1 or 2, and $R^2$ and $R^3$ are, independently, alkyl or 1 to 12 carbon atoms, alkoxy of 1 to 12 carbon atoms, phenyl, phenyl substituted with from 1 to 3 with alkyl groups having 1 to 8 carbon atoms, cycloalkyl of 5 to 6 carbon atoms, carboalkyoxy of 2 to 9 carbon atoms, chlorine, carboxyalkyl of 2 to 9 carbon atoms, alkylaryl of 7 to 9 carbon atoms, or arylalkyl of 7 to 9 carbon atoms.

In a preferred embodiment of the present invention, the substituted benzotriazole may be present in the amount of from about 0.001% to about 5% by weight based on the total composition. In a most preferred embodiment, the substituted benzotriazoles may comprise from about 0.05 to about 1.5 weight percent of the total composition.

In another preferred embodiment of the present invention, the substituted benzotriazole is 2(2′-hydroxy-3′,5′-di-(t-amyl)phenyl)benzotriazole.

## DETAILED DESCRIPTION

The benzotriazole derivatives which are useful in the present invention have the formula:

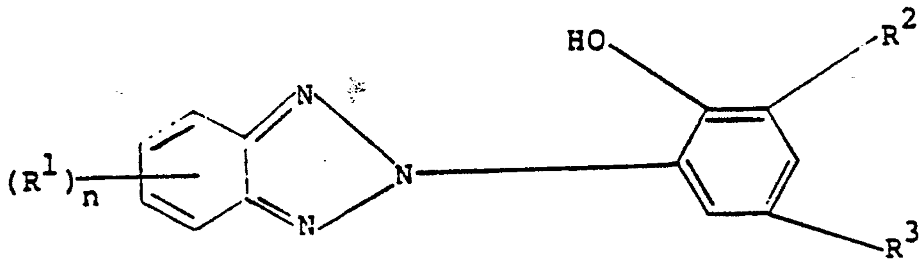

wherein $R^1$ is alkyl of 1 to 6 carbon atoms, alkoxy of 1 to 6 carbon atoms, halogen, carboxy, sulfonamido, sulfonic acid or nitro, n is 0, 1 or 2, and $R^2$ and $R^3$ are, independently, alkyl of 1 to 12 carbon atoms, alkoxy of 1 to 12 carbon atoms, phenyl, phenyl substituted with 1 to 3 alkyl groups, the alkyl groups having 1 to 8 carbon atoms, cycloalkyl of 5 to 6 carbon atoms, carboalkoxy of 2 to 9 carbon atoms, chlorine, carboxyalkyl of 2 to 9 carbon atoms, alkylaryl of 7 to 9 carbon atoms, or arylalkyl of 7 to 9 carbon atoms.

In preferred embodiments of the present invention, $R^2$ and $R^3$ comprise branched or straight chain alkyl groups of 1 to 6 carbon atoms and may include a substituted phenyl group on the chain.

The 2-hydroxy-3,5-substituted benzotriazoles used in the present invention may be prepared by any of the methods which are well known in the art, such as that disclosed in U.K. 1,494,824. For instance, a 2-nitro-2-hydroxy-3,5-substituted azobenzene may be subjected to reduction and cyclization in an alkaline aqueous organic, preferably aqueous alkali/alcohol medium in the presence of a noble metal of group VIII of the Periodic Table as hydrogenation catalyst, and recovering the desired benzotriazole.

The inventive compounds may be present in an amount from 0.001 to about 5 weight percent based on the weight of the thermoplastic resin, preferably from about 0.1 to about 0.5 weight percent based on the weight of the thermoplastic resin. The lack of yellowing occuring with these compounds in aqueous environments is not significantly affected even at relatively higher loadings.

The UV-degradable thermoplastic resins to which these compounds may be added include acrylic-styrene-acrylonitrile (ASA) resins, acrylonitrile-butadiene-styrene (ABS) resins, ethylene propylene diene (EPDM) modified styrene-acrylonitrile resins, acrylic resins, poly(styrene-co-acrylonitrile) (SAN) resins, cellulose resins, acetal resins, fluoropolymer resins, chlorinated polyether resins, alkyd resins, amino resins, urethane resins, epoxy resins, polyamide resins, phenoxy resins, furan resins, phenol resins, polyimide resins, polyester resins, polyolefin resins, polystyrene resins, polyvinyl chloride resins, polycarbonate resins, polyphenylene ether resins, mixtures of any of the foregoing, and the like, although many other UV-degradable thermoplastic resins are also within the scope of the present invention.

In the most preferred embodiments, the benzotriazole derivative is from about 0.1 to about 0.5 weight percent of the total composition, and comprises 2-((2′-hydroxy-3′,5′di-t-amyl)phenyl)benzotriazole; 2-((2′-hydroxy-3′,5′-di-(t-butyl)phenyl)benzotriazole; 2-((2′-hydroxy-3′(t-butyl)-5′-methylphenyl)benzotriazole; or 2-((2′-hydroxy-3′,5-di(alpha, alpha dimethylpropyl)phenyl)benzotriazole.

## DETAILED DESCRIPTION OF THE PREFERRED EMBODIMENTS

The following Examples illustrate the invention. They are not to be construed to limit the claims in any manner whatsoever. Unless otherwise specified herein, all proportions are provided on a weight basis.

## EXAMPLES 1-7

Asa matrix was compounded with various low levels (0.1, 0.5 and 1.0% of UV-stabilizer weight percent of the total compositions) of UV stabilizers and immersed in an aqueous solution containing a trace amount of copper. For comparison purposes, two non-substituted benzotriazole derivatives (Examples 1 and 2), and

a benzophenone derivative (Example 7) were also mixed with an ASA matrix. The chemical formulas of these UV-stabilizers are set forth in Table 1. After six days at room temperature, the samples were reviewed and color measured against that of the starting samples. The formulations used and the results obtained are set forth in Table 2:

TABLE 1: Benzotriazole Type UV Absorber

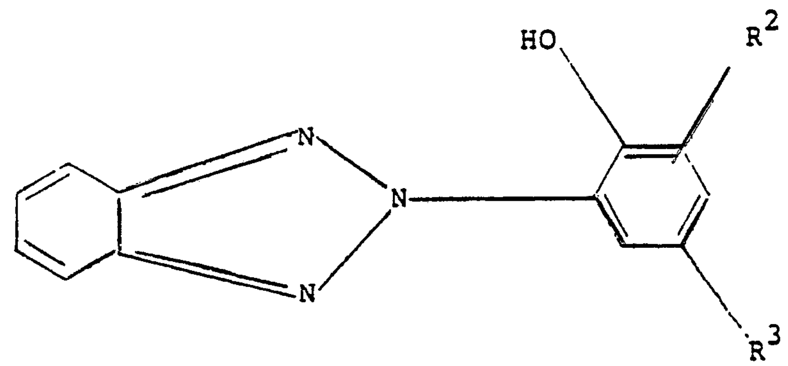

| Example | Name | $R^2$ | $R^3$ |
|---|---|---|---|
| 1 | Tinuvin®-P | H | H |
| 2 | Cyasorb®-5411 | H | $C_8H_{17}$ |
| 3 | Tinuvin®-326 | $-C(CH_3)_3$ | $-CH_3$ |
| 4 | Tinuvin®-327 | $-C(CH_3)_3$ | $-C(CH_3)_3$ |
| 5 | Tinuvin®-328 | $-C(CH_3)_2-C_2H_5$ | $-C(CH_3)_2-C_2H_5$ |
| 6 | Tinuvin®-234 | $-C(CH_3)_2-C_6H_5$ | $-C(CH_3)_2-C_6H_5$ |

TABLE 2

| CHANGE IN COLOR OF ASA/UV STABILIZER COMPOSITION AFTER SIX DAYS | | | |
|---|---|---|---|
| EXAMPLE | UV STABILIZERS | WT.% | DE FROM START (CLEANED SAMPLE) |
| | No UV Additives | 0.0 | 1.1 (0.7) |
| Unsubstituted Benzotriazoles | | | |
| 1* | Tinuvin-P | 0.1 | 3.7 (0.7) |
| | | 0.5 | 30.4 (0.8) |
| 2* | Cyasorb-5411 | 0.1 | 6.9 (2.5) |
| | | 0.5 | 14.5 (1.0) |
| 2-Hydroxy-3-5 substituted Benzotriazoles | | | |
| 3 | Tinuvin-326 | 0.1 | 1.1 (0.7) |
| | | 0.5 | 1.6 (2.3) |
| 4 | Tinuvin-327 | 0.1 | 1.6 (2.4) |
| | | 0.5 | 1.5 (1.9) |
| 5 | Tinuvin-328 | 0.1 | 1.0 (0.6) |
| | | 0.5 | 1.6 (1.4) |
| | | 1.0 | 1.5 (1.1) |
| 6 | Tinuvin-234 | 0.1 | 1.8 (1.0) |
| | | 0.5 | 0.8 (1.2) |
| 7* | Benzophenone Cyasorb-531 | 0.1 | 0.7 (0.5) |
| | | 0.5 | 1.8 (1.2) |

* Control for comparison.

The excellent UV stabilization and lack of yellowing is clearly shown by comparing controls 1 and 2 with the 2-hydroxy-3,5-substituted benzotriazoles of the present invention. Although all of the samples showed a degree of yellowing as measured by the color shift, the compositions of the present invention showed a large and unexpected decrease in color shift as compared to the 3,5-unsubstituted and the 3-unsubstituted benzotriazole derivative. This lack of yellowing was apparent even at high loadings of UV-stabilizer, in contrast to controls 1 and 2. The yellowing which took place over the six-day period was removable by solvent cleaning, thus showing that the yellowing of the composition was indeed a surface phenomenon.

Finally, it must be noted that Cyasorb® 531 (Example 7), a 2-hydroxy-4-n-octoxy-benzophenone also showed a marked decrease in yellowing as compared to control Examples 1 and 2. This result is not surprising because although the benzophenones and benzotriazoles use similar UV stabilization mechanism, their chemical structures are quite different. Therefore, it is not surprising that the staining phenomenon was not observed in the control sample containing the benzophenone.

This unique non-staining characteristic of the 2-hydroxy 3,5-substituted benzotriazoles of the present invention would be expected to apply as well to resins other than the ASA resin cited above. For example, this unique non-staining characteristic of the 2-hydroxy-3,5-substituted benzotriazoles would provide the same benefits to EPDM modified SAN resins, poly(methyl methacrylate) (PMMA) resins, cellulose resin, acetal resin, fluoroplastics, acrylic resin, chlorinated polyether, alkyd resin, amino resin, urethane resin, epoxy resin, polyamide resin, phenoxy resin, furan resin, phenol resin, polyamide resin, polyeter resin, polyethylene resin, polypropylene resin, polystyrene resin, polyvinyl chloride resin, mixtures of any of the foregoing, and the like.

All of the foregoing patents are hereby incorporated by reference.

The foregoing examples were given by way of illustration only and are not intended as a limitation on the scope of this invention. Many variations are possible without departing from its spirit and scope.

## Claims

1. An improved method for stabilizing ultraviolet degradable thermoplastic resin composition comprising a benzotriazole stabilizer when in contact with an aqueous environment containing at least trace amounts of polyvalent heavy metal ion capable of catalyzing the development of color on the surface of articles formed from resin compositions, the improvement comprising using an effective amount of a 2-hydroxy-3,5-substituted benzotriazole having the formula:

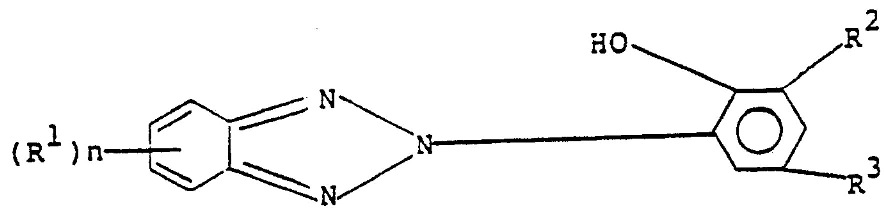

wherein $R^1$ is alkyl of 1 to 6 carbon atoms, alkoxy of 1 to 6 carbon atoms, halogen, carboxy, sulfonamido, sulfonic acid or nitro, n is 0, 1 or 2, and $R^2$ and $R^3$ are, independently, alkyl of 1 to 12 carbon atoms, alkoxy of 1 to 12 carbon atoms, phenyl, phenyl substituted with from 1 to 3 alkyl groups having 1 to 8 carbon atoms, cycloalkyl of 5 to 6 carbon atoms, carboalkoxy of 2 to 9 carbon atoms, chlorine, carboxyalkyl of 2 to 9 carbon atoms, alkylaryl of from 7 to 9 carbon atoms, or arylalkyl of 7 to 9 carbon atoms.

2. The method of Claim 1 wherein said substituted benzotriazole comprises from about 0.001 to about 5 weight percent of the total composition.

3. The method of Claim 2, wherein said substituted benzotriazole comprises from about 0.05 to about 1.5 weight percent of the total composition.

4. The method of Claim 1 wherein said thermoplastic resin is acrylic-styrene-acrylonitrile (ASA) resin, acrylonitrile-butadiene-styrene (ABS) resin, ethylene propylene diene (EPDM) modified styrene-acrylonitrile resin, cellulose resin, acetal resin, fluoropolymer resin, acrylic resin, chlorinated polyether resin, alkyd resin, amino resin, urethane resin, epoxy resin, polyamide resin, phenoxy resin, furan resin, phenol resin, polyamide resin, polyester resin, polyolefin resin, polystyrene resin, poly(styrene-co-acrylonitrile) (SAN) resin, polyvinyl chloride resin, polycarbonate resin, polyphenylene ether resin, mixtures of any of the foregoing, and the like.

5. The method of Claim 4 wherein said thermoplastic resin comprises acrylic-styrene-acrylonitrile (ASA) resin, ethylene propylene diene (EPDM) modified styrene-acrylonitrile resins, acrylic resin, poly(styrene-co-acrylonitrile) (SAN) resin, mixtures of any of the foregoing, and the like.

6. The method of Claim 1, wherein said substituted benzotriazole comprises 2-((2′-hydroxy-3′(t-butyl)-5′-methylphenyl)) benzotriazole.

7. The method of Claim 1, wherein said substituted benzotriazole comprises 2-((2′-hydroxy-3′5′-di-(t-amyl)phenyl)) benzotriazole.

8. The method of Claim 1 wherein said substituted benzotriazole comprises 2-((2′-hydroxy-3′, 5′-di(t-butyl)phenyl)) benzotriazole.

9. The method of Claim 1 wherein said substituted benzotriazole is 2-((2-hydroxy-3′5′-di(alpha, alpha dimethylpropyl)phenyl))benzotriazole.

10. The method of Claim 1 wherein said resin composition comprises an acrylic-styrene-acrylonitrile (ASA) resin and said aqueous environment comprises polyvalent heavy metal ions comprising copper.

European Patent Office

# EUROPEAN SEARCH REPORT

Application Number

EP 89 10 5026

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 127 586 (J. RODY et al.)<br>* Claims *<br>--- | 1-9 | C 08 K 5/34 |
| Y | US-A-4 278 590 (M. DEXTER et al.)<br>* Column 3, line 30 - column 4, line 59; column 6, line 60 - column 7, line 32 *<br>--- | 1-9 | |
| A | US-A-3 367 907 (R.H. HANSEN)<br>----- | | |

TECHNICAL FIELDS SEARCHED (Int. Cl.4)

C 08 K
C 08 L

The present search report has been drawn up for all claims

| Place of search | Date of completion of the search | Examiner |
|---|---|---|
| THE HAGUE | 26-07-1989 | DE LOS ARCOS Y VELAZQUEZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document